Europäisches Patentamt

European Patent Office

Office européen des brevets

(19)

(11) Veröffentlichungsnummer: **0 268 730**
A2

(12) # EUROPÄISCHE PATENTANMELDUNG

(21) Anmeldenummer: 87106887.0

(22) Anmeldetag: 12.05.87

(51) Int. Cl.4: **F16J 15/02** , F16J 15/34 , F16L 23/00 , F16B 21/18

(30) Priorität: 14.11.86 DE 3638988

(43) Veröffentlichungstag der Anmeldung:
01.06.88 Patentblatt 88/22

(84) Benannte Vertragsstaaten:
AT BE CH DE ES FR GB IT LI LU NL SE

(71) Anmelder: **Firma Carl Freudenberg**
**Höhnerweg 4**
**D-6940 Weinheim/Bergstrasse(DE)**

(72) Erfinder: **Kraus, Reinhold**
**Hoffeldstrasse 8**
**D-6942 Mörlenbach(DE)**

(74) Vertreter: **Weissenfeld-Richters, Helga, Dr.**
**Höhnerweg 2**
**D-6940 Weinheim/Bergstrasse(DE)**

(54) **Halteflansch.**

(57) Ein Halteflansch zur flüssigkeitsdichten Festlegung eines radial nach außen vorspringenden Ringbundes (2) an einer Dichtfläche (3). Der Ringbund (2) wird von zwei nach innen vorspringenden Stützbunden (4, 5) des Halteflansches axial umgriffen und durch zwei erste O-Ringe (6) gegenüber den Stützbunden (4, 5) abgedichtet. Der zwischen dem Ringbund (2) und der Dichtfläche (3) angeordnete Stützbund (4) besteht aus einer in einer Ausnehmung (7) des Halteflansches (1) eingesenkten Ringscheibe (8). Die Ringscheibe (8) ist außenseitig und die Ausnehmung (7) innenseitig jeweils durch eine gleichsinnig zur Öffnung in ihrem Durchmesser verminderte Kegelfläche (9, 10) begrenzt. Beide Kegelflächen (9, 10) haben einen Abstand voneinander und sind durch einen zweiten O-Ring (11) aufeinander abgestützt. Der zweite O-Ring (11) hat eine größere axiale Erstreckung als die Ausnehmung (7) und bewirkt zugleich die statische Abdichtung des Halteflansches (1) gegenüber der Dichtfläche (3).

Schnitt C-D

Fig. 1

## Halteflansch

Die Erfindung betrifft einen Halteflansch nach dem Oberbegriff von Anspruch 1.

Ein solcher Halteflansch gelangt beispielsweise zur Anwendung in bezug auf die Abdichtung und Festlegung des Gegenringes einer Gleitringdichtung gegenüber dem Gehäuse einer Kreiselpumpe. Die Ringscheibe ist dabei mit dem Halteflansch verschraubt und in axialer Richtung beiderseits mit offenen Nuten versehen, in welche O-Ringe einerseits zur Abdichtung gegenüber dem Halteflansch und andererseits zur Abdichtung gegenüber der Dichtfläche des Pumpengehäuses eingefügt sind. Die Herstellung und Montage der Ringscheibe sind relativ aufwendig und führen aus Platzgründen zu großen Konstruktionen. Das ist ebensowenig befriedigend wie die lose Zuordnung des für die Abdichtung der Ringscheibe gegenüber der Dichtfläche benötigten O-Ringes. Ein fehlerhafter Einbau oder ein Verlust vor dem Einbau ist hiervon die häufige Folge.

Der Erfindung liegt die Aufgabe zugrunde, einen Halteflansch der eingangs genannten Art derart weiterzuentwickeln, daß die vorgenannten Nachteile bei vereinfachtem, konstruktivem Aufbau vermieden werden.

Diese Aufgabe wird erfindungsgemäß mit den kennzeichnenden Merkmalen des Patentansprauchs 1 gelöst. Auf vorteilhafte Ausgestaltung nehmen die Unteransprüche bezug.

Bei dem erfindungsgemäßen Halteflansch sind die Ringscheibe außenseitig und die Ausnehmung innenseitig durch gleichsinnig in Richtung der Dichtfläche in ihrem Durchmesser verminderte Kegelflächen begrenzt und bilden gemeinsam mit der von der Dichtfläche abgewandten, axialen Begrenzungsfläche der Ausnehmung die Nut, in welcher der zweite O-Ring gehaltert ist.

Dieser hat einen Außendurchmesser, der größer ist als der kleinste Durchmesser der ihn außenseitig umschließenden Kegelfläche der Nut und hintergreift dieselbe folglich in einem axialen Abstand hinter deren Mündung. Das Einfügen des O-Ringes erfordert aus diesem Grunde eine vorübergehende, elastische Deformierung des den O-Ring bildenden Werkstoffkörpers, welche jedoch leicht erbracht werden kann, wenn der O-Ring in verschiedenen Umfangsbereichen der Nut in zeitlicher Aufeinanderfolge in dieselbe eingefügt wird.

Die Nut wird innenseitig durch die die Ringfläche außenseitig umschließende Kegelfläche begrenzt, welche am Nutgrund ihren größten Durchmesser aufweist. Der größte Durchmesser dieser Kegelfläche übersteigt den Innendurchmesser des zweiten O-Ringes, wodurch er von der Kegelfläche auf der von der Mündung der der Nutabgewandten Seite hintergriffen wird. Nach dem Einfügen des zweiten O-Ringes in die Nut ist daher ein axiales Entnehmen der Ringscheibe nicht ohne weiteres möglich. Die Ausübung einer axial gerichteten Kraft auf die Ringscheibe hat vielmehr eine radiale Verpressung des zweiten O-Ringes zwischen den die Nut innen-und außenseitig begrenzenden Kegelflächen zur Folge, die von hoher Tragfähigkeit ist und eine unverlierbare Zuordnung sowohl der Ringscheibe als auch des zweiten O-Ringes zu dem Halteflansch gewährleistet. Ein Verlust des zweiten O-Ringes oder der Ringscheibe vor der Montage des Halteflansches ist dadurch weitgehend ausgeschlossen.

Der zweite O-Ring hat ein kreisförmig begrenztes Profil mit einem Profildurchmesser, das größer ist als die axiale Teife der Nut. Nach der axialen Anpressung des Halteflansches an die Dichtfläche ergibt sich dadurch eine axiale Verpressung des O-Ringes zwischen der Dichtfläche und dem Nutgrund, was eine ausgezeichnete Abdichtung zwischen dem Halteflansch und der Dichtfläche gewährleistet.

Die Verwendung eines weiteren O-Ringes ist dadurch entbehrlich. Die Anpressung kann auf an sich bekannte Weise erfolgen, beispielsweise unter Zuhilfenahme von Andrückschrauben oder ähnlichem.

Der zweite O-Ring kann aus irgendeinem der einschlägig verwendeten Werkstoffe hergestellt sein. Er besteht vorzugsweise aus einem gummiartigem Werkstoff einer Härte Shore A von 65 bis 90.

Die Ringscheibe, die Ausnehmung des Halteflansches und der O-Ring sind von rotationssymmetrischer Gestalt, was die Herstellung und das Zusammenfügen außerordentlich vereinfacht. Sie erfüllen selbst bei kleinsten Dimensionen in ausgezeichneter Weise ihren Zweck.

Die axiale Erstreckung der Nut kann mit der axialen Erstreckung der Ringscheibe übereinstimmen, was die Herstellung der Nut außerordentlich vereinfacht. Es ist insbesondere nicht mehr erforderlich, Einsteckwerkzeuge kleinster Dimensionen zu verwenden.

Die die Nut innen-und außenseitig begrenzenden Kegelflächen können an sich beliebige, positive Kegelwinkel haben. In Hinblick auf die vorliegend zur Anwendung gelangenden kleinen Dimensionen der O-Ringe haben sich Werte von 30 bis 150° besonders bewährt.

Auch hinsichtlich des Profildurchmessers des zweiten O-Ringes läßt sich ein Richtwert angeben. Er soll 0,5 bis 0,8mal so groß ausgebildet sein wie die halbe Differenz zwischen dem kleinsten Durchmesser der die Ausnehmung begrenzenden Kegelfläche und dem größten Durchmesser der die Ringscheibe begrenzenden Kegelfläche.

Es versteht sich von selbst, daß der größte Durchmesser der Ringscheibe stets kleiner bemessen sein muß als der kleinste Durchmesser der Ausnehmung, um ein Einfügen der Ringscheibe in dieselbe unter Bildung der Nut zu ermöglichen. Des weiteren sollte der Profildurchmesser des zweiten O-Ringes einen Wert von 1,5 mm nicht unterschreiten.

Die Erfindung wird nachfolgend anhand der als Anlage beigefügten Zeichnung weiter erläutert. Es zeigen:

Figur 1

den erfindungsgemäßen Halteflansch in einer Verwendung bei der Festlegung und Abdichtung des Gegenringes einer Gleitringdichtung in längsgeschnittener Darstellung.

Figur 2

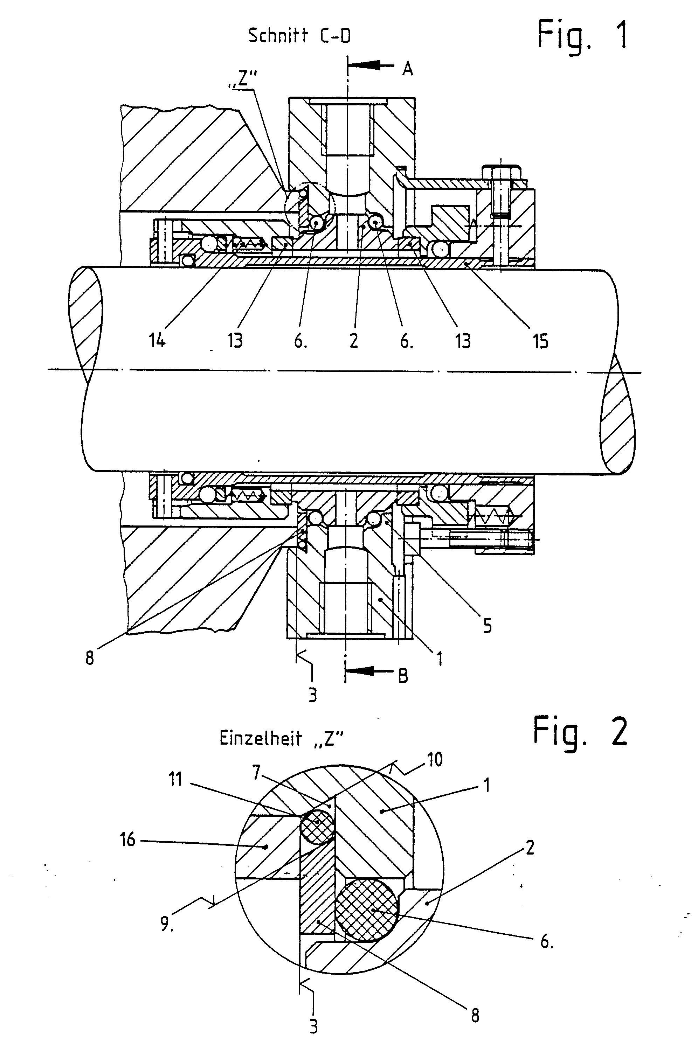

eine Ausschnittsvergrößerung des erfindungsgemäß angesprochenen Bereiches aus Figur 1.

Figur 3

die in Figur 1 gezeigte Gleitringdichtung in quergeschnittener Darstellung.

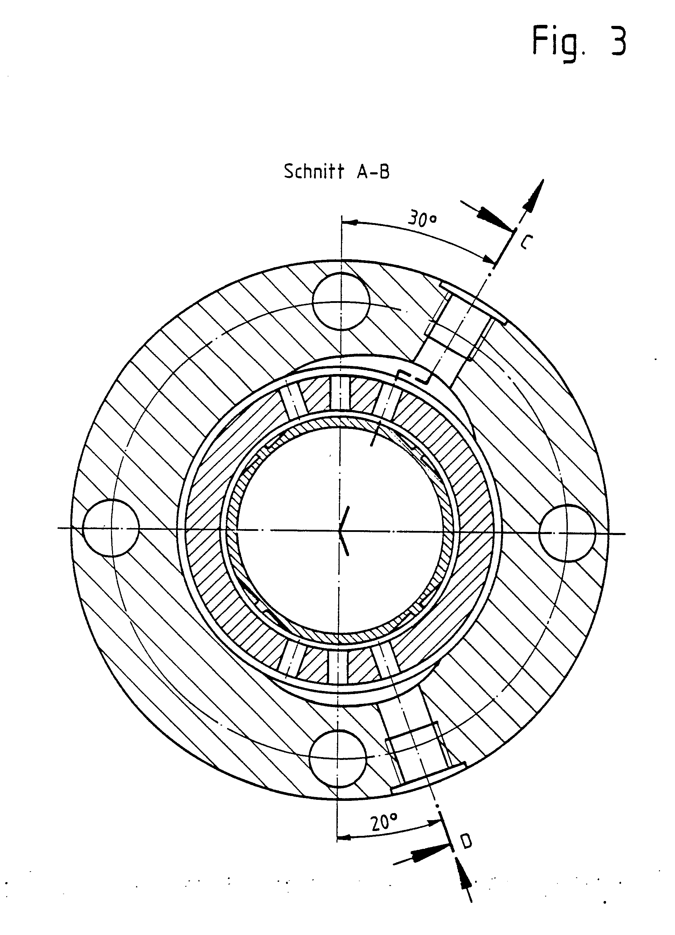

Die in Figur 1 gezeigte Gleitringdichtung besteht aus einer einbaufertigen Einheit, die doppelseitig abgedichtet ist. Sie ist in den Ringspalt zwischen einer angetriebenen Welle und einer die Welle umschließenden Gehäusewandung eingesetzt und von Sperrflüssigkeit durchflutet. Der Weg der Sperrflüssigkeit ist aus Figur 3 ersichtlich.

Die Gleitringdichtung selbst besteht aus einer unverdrehbar auf der Oberfläche der abzudichtenden Welle festgelegten Hülse, die gegenüber der Welle durch einen O-Ring statisch abgedichtet ist und zugleich den Träger für zwei einander spiegelbildlich zugeordnete Gleitringe 13 bildet. Diese liegen relativ verdrehbar an den stirnseitigen Begrenzungsflächen des Gegenringes an, welcher einen einstückigen Bestandteil des Ringbundes 2 bildet. Die erforderliche Anpressung bewirken die gleichmäßig auf dem Umfang verteilten Druckfedern 14, welche ihrerseits in axialer Richtung auf der Hülse 15 abgestützt sind. Der Ringbund 2 wird in axialer Richtung beiderseits umgriffen von den in radialer Richtung nach innen vorspringenden Stützbunden 4, 5 des Halteringes 1. Der rechte, 5, dieser beiden Stützbunde bildet einen einstückigen Bestandteil des Halteringes, der linke dieser beiden Stützbunden 4, wird durch die Ringscheibe 8 gebildet, welche unter Zwischenfügung des zweiten O-Ringes 11 gegenüber der Ausnehmung des Halteflansches 1 abgedichtet und unverlierbar festgelegt ist.

Die Einzelheiten werden durch Figur 2 verdeutlicht. Es ist zu ersehen, daß die Ringscheibe 8 außenseitig und die Ausnehmung 7 innenseitig durch gleichsinnig geneigte Kegelflächen begrenzt sind, die einen gegenseitigen Abstand voneinander haben. In die durch den Abstand gebildete Nut ist der zweite O-Ring 11 eingefügt. Dieser ist so dimensioniert, daß sich nach der durch die Montage bedingten Anpressung des Halteflansches 1 an die Dichtfläche 3 des Gehäuses 16 eine axiale Verpressung zwischen dem Nutgrund und der Dichtfläche 3 ergibt. Leckflüssigkeit vermag dadurch den genannten Bereich nicht zu passieren.

Vor der Montage des Halteflansches 1 gewährleistet das Vorhandensein des zweiten O-Ringes 11 die unverlierbare Festlegung der Ringscheibe 8 relativ zu dem Halteflansch 1. Dieser Effekt beruht darauf, daß der zweite O-Ring 11 die die Nutaußenseite begrenzende Kegelfläche 10 axial hinter der Mündung der Nut hintergreift und seinerseits von der Kegelfläche 9 der Ringscheibe 8 auf der von der Mündung abgewandten Seite axial hintergriffen wird. Eine gewaltsame Auswärtsbewegung der Ringscheibe 8 hat daher eine radiale Verpressung des zweiten O-Ringes 11 zwischen den einander umschließenden Kegelflächen 9, 10 zur Folge, was der Verbindung eine große Haltbarkeit verleiht und eine Ablösung der Ringscheibe 8 von dem Halteflansch 1 weitgehend ausschließt. Die Verbindung kann daher als unverlierbar bezeichnet werden.

Die ersten O-Ringe 6 dienen der Abdichtung des Haltflansches 1 gegenüber dem Ringbund 2. Auch in dem genannten Bereich vermag daher Leckflüssigkeit nicht zu passieren.

Bezugszeichenliste

1 Halteflansch
2 Ringbund
3 Dichtfläche
4 Stützbund
5 Stützbund
6 1. O-Ring
7 Ausnehmung
8 Ringscheibe
9 Kegelfläche
10 Kegelfläche
11 2. O-Ring
12 axiale Begrenzungsfläche
13 Gleitring
14 Druckfeder
15 Hülse

**Ansprüche**

1. Halteflansch zur flüssigkeitsdichten Festlegung eines radial nach außen vorspringenden Ringbundes an einer Dichtfläche, bei der der Ringbund von zwei nach innen vorspringenden Stützbunden des Halteflansches axial umgriffen und durch zwei erste O-Ringe gegenüber den Stützbunden abgedichtet ist, wobei der zwischen den Ringbunden und der Dichtfläche angeordnete Dichtbund aus einer in einer Ausnehmung des Halteflansches eingesenkten Ringscheibe besteht und durch einen zweiten O-Ring gegenüber der Dichtfläche abgedichtet ist, der in einer axial in Richtung der Dichtfläche offenen Nut gelagert und nach der Montage des Halteflansnches elastisch zwischen der Dichtfläche und der axialen Begrenzungsfläche der Nut verpreßt ist, dadurch gekennzeichnet, daß die Ringscheibe (8) außenseitig und die Ausnehmung (7) innenseitig durch gleichsinnig in Richtung der Dichtfläche (3) in ihrem Durchmesser verminderte Kegelflächen (9, 10) begrenzt sind und gemeinsam mit der von der Dichtfläche (3) abgewandten, axialen Begrenzungsfläche (12) der Ausnehmung (7) die Nut bilden und daß der zweite O-Ring (11) einen Außendurchmesser aufweist, der größer ist als der kleinste Durchmesser der ihn außenseitig umschließenden Kegelfläche (10) und einen Innendurchmesser, der kleiner ist als der größte Durchmesser der Kegelfläche (9) der Ringscheibe (8).

2. Halteflansch nach Anspruch 1, dàdurch gekennezeichnet, daß die axiale Erstreckung der Ausnehmung (7) größer ist als die axiale Erstreckung der Ringscheibe (8).

3. Halteflansch nach Anspruch 1 bis 2, dadurch gekennzeichnet, daß die Kegelflächen (9, 10) im wesentlichen übereinstimmende Kegelwinkel von 30 bis 150° einschließen.

4. Halteflansch nach Anspruch 1 bis 3, dadurch gekennzeichnet, daß die halbe Differenz zwischen dem kleinsten Durchmesser der die Ausnehmung (7) begrenzenden Kegelfläche (10) und dem größten Durchmesser der die Ringscheibe (8) begrenzenden Kegelfläche (9) 0,5 bis 0,8mal so groß ist wie der Durchmesser des Profils des zweiten O-Ringes (11).

# Fig. 1

Schnitt C-D

# Fig. 2

Einzelheit „Z"

0 268 730

Fig. 3

Schnitt A-B